# EUROPEAN PATENT SPECIFICATION

(11) **EP 1 696 445 B1**
(45) Date of publication and mention of the grant of the patent: **05.08.2009**
(21) Application number: 05077911.5
(22) Date of filing: 16.12.2005
(51) Int. Cl.: H01G 2/02, H01G 4/38

(54) **Capacitor assembly and method of forming it**
Kondensatoranordnung und Verfahren zur ihrer Herstellung
Assemblage de condensateurs et méthode pour sa réalisation

(30) Priority: 24.02.2005 US 65492
(43) Date of publication of application: 30.08.2006
(73) Proprietor: High Energy Corp., Parkesburg, PA 19365 (US)
(72) Inventor: Georgopoulos, George, Pine Brook, New Jersey 07058 (US)
(74) Representative: W.P. Thompson & Co.

(56) References cited:
- EP-A- 0 033 697
- EP-A- 1 508 905
- FR-A- 2 671 904
- US-A- 4 441 684
- PATENT ABSTRACTS OF JAPAN vol. 2002, no. 07, 3 July 2002 (2002-07-03) & JP 2002 076655 A (SANSHA ELECTRIC MFG CO LTD), 15 March 2002 (2002-03-15)

## Description

### Cross Reference To Rotated Applications

This application claims the benefit of U.S. Provisional Application No. 60/620,560 filed October 20,2004.

### Field of the Invention

The present invention generally relates to capacitors and capacitor assemblies for mounting capacitors to other electrical elements such as bus bars.

### Background of the Invention

Capacitors, such as high frequency capacitors, may be formed from one or more discretely wound capacitor elements mounted in an assembly. Each wound capacitor element may comprise a wound-film capacitor. Generally the capacitor assembly performs two functions. Multiple discrete wound capacitor elements are electrically connected together in the assembly to form a composite capacitor with the desired electrical characteristics, and the assembly may provide means for mounting the assembled capacitor to other electrical components such as bus bars.

Document JP 2002 076655 A describes an L. shaped mounting part for electrical components.

A capacitor assembly may be formed from a first and second solid metal electrode between which the capacitor dielectric elements are connected as disclosed in US Patent No. 5,953,201. A through hole is bored in each solid metal electrode so that a fastener can be placed through the holes to attach the capacitor assembly to bus bars. A disadvantage of this arrangement is that the solid metal electrodes need to be machined or otherwise processed for the insertion of the capacitor dielectric elements between the electrodes and to create the through holes in, thus increasing the costs for producing the capacitor assembly. Therefore there is the need for a capacitor assembly comprising one or more capacitor elements that are joined together and mountable to bus bars without the need for solid electrodes.

### Brief Summary of the Invention

Capacitor assemblies according to the invention are defined by the features of claim 1 or claim 8.

In one aspect, the present invention is a capacitor assembly formed by at least one capacitive element disposed between a pair of electrically conductive brackets that are electrically separate from each other. Each bracket comprises at least one flat L-shaped section and at least one arcuate section. Each L-shapcd section comprises a capacitor seating surface and an assembly conducting surface. The arcuate surface is adjacent to the seating surface. Each of the at least one capacitive element is connected at opposing ends to the capacitor seating surfaces on the pair of brackets. A fastener can be inserted into the region formed by the arcuate surface to connect the capacitor assembly to other electrical elements such as bus bars. When fastened to bus bars, the assembly conducting surfaces provide electrical and thermal conduction between the brackets and the bus bars.

In another aspect, the present invention is a method of forming a capacitor assembly and is defined by the features of claim 15. A flat electrically conductive material is used to form a bracket used in the assembly. A rectangular region is cut out of the bottom of the material below which an arcuate section will be formed. An arcuate section is formed above the cut out rectangular region. One or more L-shaped sections are formed adjacent to the arcuate section by bending the material approximately 90 degrees along a horizontal line extending along the bottom of the arcuate section to form one or more L-shaped sections having a capacitor seating surface adjacent to the arcuate section and an assembly conducting surface substantially normal to the capacitor seating surface. A fastener may be inserted into each region formed by the arcuate section to electrically and thermally connect the capacitor assembly to other electrical components, such as bus bars, by the assembly conducting surfaces on the one or more L-shaped sections.

Other aspects of the invention are set forth in this specification.

### Brief Description of the Drawings

For the purpose of illustrating the invention, there is shown in the drawings a form that is presently preferred; it being understood, however, that this invention is not limited to the precise arrangements and instrumentalities shown.

FIG. 1 is a perspective view of one example of the capacitor assembly of the present invention.

FIG. 2 is an exploded perspective view of the capacitor assembly shown in FIG. 1.

FIG. 3(a) is an elevation view of the inside of one example of a bracket used with a capacitor assembly of the present invention.

FIG. 3(b) is an elevation view of the outside of one example of a bracket used with a capacitor assembly of the present invention.

FIG. 3(c) is a top view of one example of a bracket used with a capacitor assembly of the present invention.

FIG. 4 is one example of a flat stock material used to form the bracket illustrated in FIG. 3(a) through FIG. 3(c).

FIG. 5(a) is an elevation view of the inside of another example of a bracket used with a capacitor assembly of the present invention.

FIG. 5(b) is an elevation view of the outside of another example of a bracket used with a capacitor assembly of the present invention and a fastener inserted into the region formed around an arcuate section of the bracket.

FIG. 5(c) is a top view of another example of a bracket used with a capacitor assembly of the present invention.

FIG. 6 is another example of a flat stock material used to form the bracket illustrated in FIG. 5(a) through FIG. 5(c).

FIG. 7 is a perspective view of one example of the capacitor assembly of the present invention wherein one capacitive element is used.

FIG. 8 is a perspective view of another example of the capacitor assembly of the present invention.

### Detailed Description of the Invention

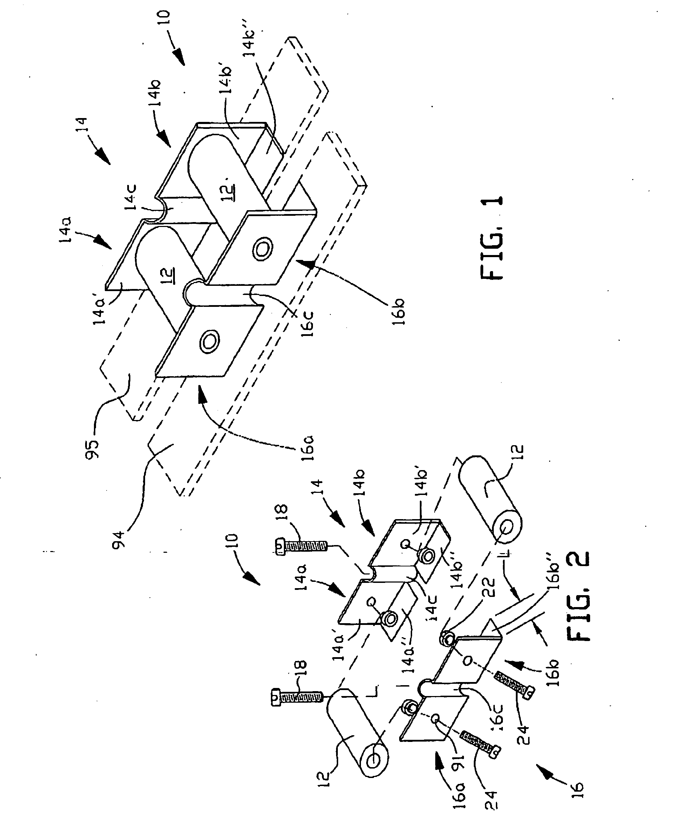

Referring now to the drawings, wherein like numerals indicate like elements, there is shown in FIG. 1 through FIG. 3(c), one example of the capacitor assembly 10 of the present invention. In this non-limiting example of the invention two film-wound capacitors or capacitive elements 12 are disposed between first bracket 14 and second bracket 16. Other examples of the invention may use a different number or type of capacitive elements. Each of the first and second brackets comprise one or more L-shaped sections, namely section 14a and section 14b for the first bracket, and section 16a and section 16b for the second bracket Each of the first and second brackets have an arcuate section, namely arcuate section 14c for the first bracket and arcuate section 16c for the second bracket. In this non-limiting example of the invention, the arcuate sections protrude inward to the assembly; in other examples of the invention one or more of the arcuate sections may protrude outward from the assembly.

Each of the capacitive elements have their opposing ends suitably connected to the opposing capacitive seating surfaces (14a' and 14b' for the first bracket, and 16a' and 16b' for the second bracket) of the L-shaped sections to establish an electrical path between each end conductor of each capacitive element and the facing capacitor seating surface. One non-limiting means of connection is most clearly illustrated in FIG. 2. Fasteners 22 (four places) sit in holes 91 in the capacitor seating surfaces of the L-shaped sections and can provide a means for electrical contact between the end conductor of a capacitive element and its capacitor facing seating surface. Fasteners 22 can be PEM nuts, which are self-clinching nuts that secure themselves to the capacitor seating surfaces of the L-shaped sections when seated in the holes-Through fastener 24 can be inserted through holes 91, fasteners 22, if used, and the center spool passage of a capacitor element to hold a capacitive element in place in the capacitor assembly. If through fasteners 24 are threaded screws and fasteners 22 are used, the through fasteners can be screwed into fasteners 22, if threaded, to hold a capacitive element in place in the assembly. Alternatively in lieu of through fasteners 24, a separate fastener may be provided for mating with each fastener 22, or for mating directly with the end of a capacitive element. In other examples of the invention a solder connection may be made between the end of each capacitive element and the adjacent capacitor seating surface. Conducting surfaces (surface 14a" and surface 14b" for the first bracket, and surface 16a" and surface 16b" for the second bracket) on the L-shaped sections are disposed approximately 90 degrees to the capacitor seating surfaces. In this particular example of the invention the conducting surfaces face inward to the assembly; in other examples of the invention one or more of the conducting surfaces may face outward from the assembly. The inward length, L (FIG. 2), of each assembly conducting surface is such that the conducting surfaces of the opposing brackets do not make contact with each other.

Fasteners 18 (FIG. 2) can be inserted into the region formed inside of arcuate sections 14c and 16e to secure the capacitor assembly to other electrical components such as bus bars. By so securing the capacitor assembly to the bus bars, the bottom of the assembly conducting surfaces make contact with the bus bars to establish an electrical and thermal connection between the assembly conducting surfaces and the bus bars.

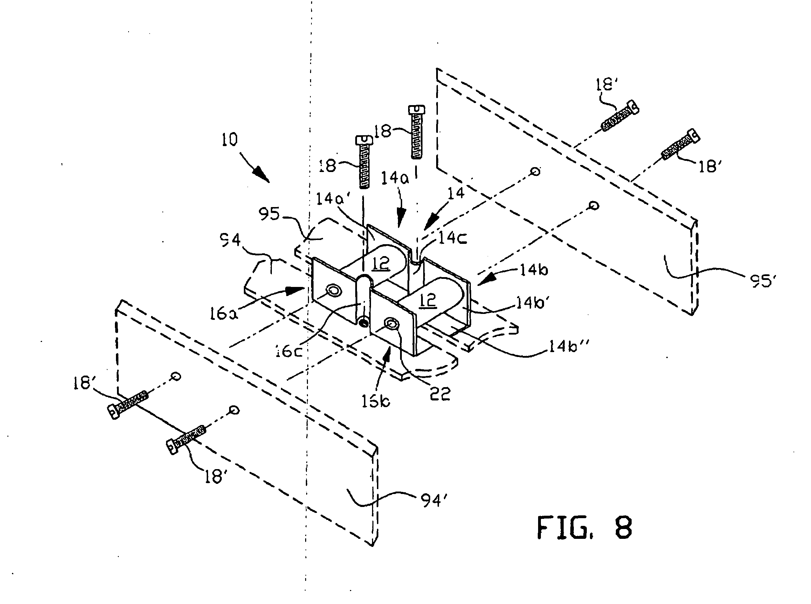

In another example of the invention as shown in FIG. 8, capacitor assembly 10 may be secured to vertical bus bars 94 and 95 by fasteners 18 inserted into the region formed inside of arcuate sections 14c and 16c and secured to the vertical bus bars, or alternatively, the capacitor assembly may be secured to horizontal bus bars 94' and 95' by fasteners 18' inserted through the openings in the horizontal bus bars and secured to the capacitor assembly by fasteners 22.

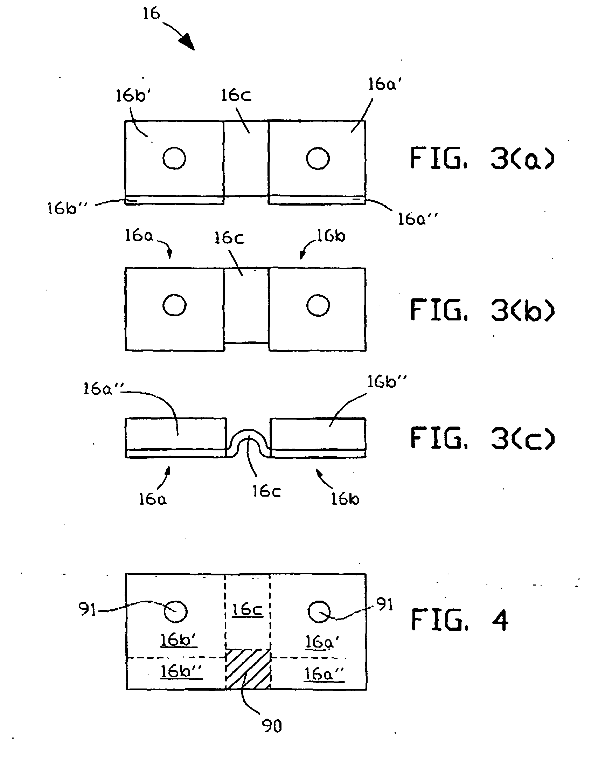

Each of the first and second brackets may be formed from flat stock material of an electrically conductive material, such as, but not limited to, 1,59 mm (1/16-inch) copper stock. FIG. 4 represents a rectangular flat stock material. Rectangular section 90 (shown crosshatched) is cut out of the bottom of the flat stock below where arcuate section 16c will be formed. The flat stock can be bent around mandrels to form the arcuate section and L-shaped sections 16a and 16b with capacitor seating surfaces 16a' and 16b' and assembly conducting surfaces 16a" and 16b". Holes 91 are drilled into the portion of the L-shaped sections forming the seating surfaces to accommodate fasteners and/or attachment of the capacitive elements.

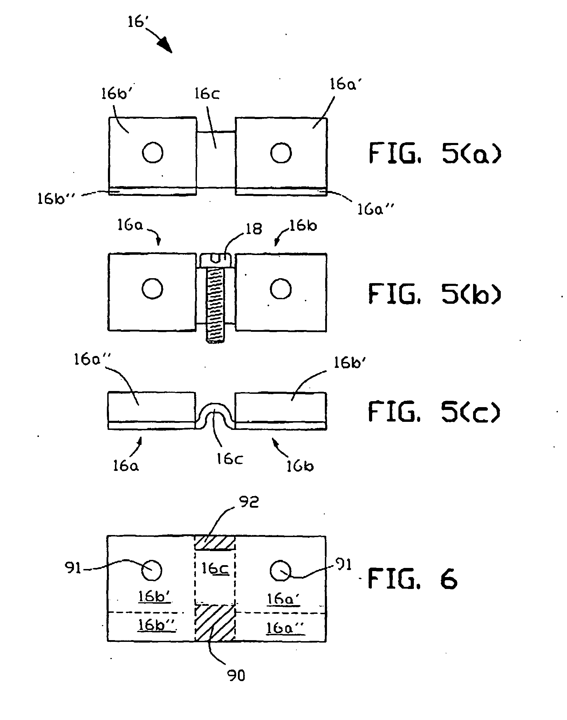

In formation of alternate brackets illustrated in FIG. 5(a) through FIG. 5(c), a second rectangular section 92 (shown crosshatched) is cut out of the top of the flat stock represented in FIG. 6 above where the arcuate section 16c will be formed. With this alternate arrangement the heads of fasteners 18 can be seated flush with the top of the L-shaped sections of the brackets as shown in FIG. 5(b).

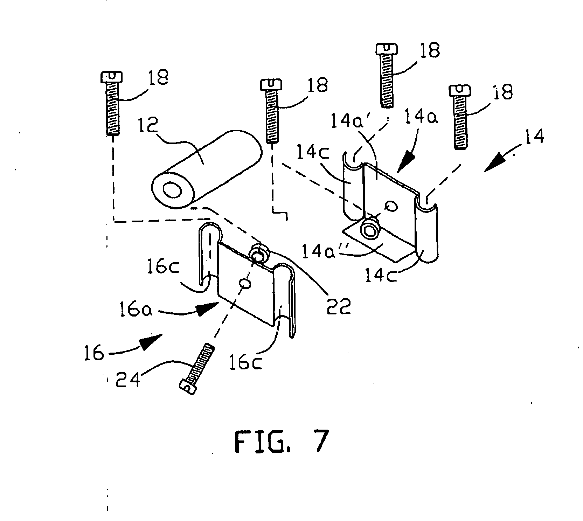

For other examples of the invention, for example, when one capacitive element is disposed between opposing seating surfaces of the L-shaped sections, arcuate sections may be provided on opposing sides of each L-shaped section to provide a means for securing the capacitor assembly with four fasteners as illustrated in FIG. 7. Other examples of the invention may have different arrangements of arcuate sections as long as each arcuate section is adjacent to the capacitor seating surface of an L-shaped section of the bracket. Further in other examples of the invention the arcuate sections may form a totally enclosed region wherein the fastener is inserted.

The foregoing examples do not limit the scope of the disclosed invention. The scope of the disclosed invention is defined in the appended claims.

## Claims

1. A capacitor assembly comprising:
a first (14) and second (16) bracket, each of the first and second brackets having a bracket arcuate section (14c,16c) disposed between a pair of bracket L-shaped sections (14a,14b,16a,16b), each of the pair of bracket L-shaped sections having a capacitor seating surface (14a',14b',16a',16b') and an assembly conducting surface (14a",14b",16a",16b"), the capacitor seating surface adjacent to the bracket arcuate section and substantially perpendicular to the assembly conducting surface, and
at least two capacitive elements (12), each of the at least two capacitive elements having a first and a second end, the first ends of the at least two capacitive elements making electrical contact with the capacitor seating surfaces on the first bracket, the second ends of the at least two capacitive elements making electrical contact with the capacitor seating surfaces on the second bracket.

2. The capacitor assembly of claim 1 further comprising a hole (91) in each of the capacitor seating surfaces, and a first fastener (22) inserted into each of the holes of the capacitor seating surfaces to keep the first or second ends of the at least two capacitive elements in contact with its adjacent capacitor seating surface.

3. The capacitor assembly of claim 1 further comprising a hole in each of the capacitor seating surfaces, and a through fastener (24) inserted through the center spool passage of one of the at least two capacitive elements and adjacent holes in the capacitor seating surfaces to keep the first or second ends of the one of the at least two capacitive elements in contact with its adjacent capacitor seating surface.

4. The capacitor assembly of claim 2 further comprising a through fastener inserted through the center spool passage of one of the at least two capacitive elements and adjacent first fasteners to keep the first or second ends of the one of the at least two capacitive elements in contact with its adjacent capacitor seating surface.

5. The capacitor assembly of claim 1 further comprising a solder connection between each end of the at least two capacitive elements and its adjacent capacitor seating surface.

6. The capacitor assembly of claim 1 further comprising a first connecting fastener (18) inserted in the region formed by the bracket arcuate section in the first bracket and connected to a first bus bar (94), and a second connecting fastener inserted in the region formed by the bracket arcuate section in the second bracket and connected to a second bus bar (95) whereby the assembly conducting surfaces of the first and second brackets make contact with the first and second bus bars respectively.

7. The capacitor assembly of claim 1 further comprising a hole in each of the capacitor seating surfaces, a first connecting fastener inserted in a first bus bar and each of the holes in the first bracket, and a second connecting fastener inserted in a second bus bar and each of the holes in the second bracket whereby the capacitor seating surfaces of the first and second brackets make contact with the first and second bus bars respectively.

8. A capacitor assembly comprising :
a first and second bracket (14,16), each of the first and second brackets having a bracket L-shaped section (14a,16a) disposed between a pair of bracket arcuate sections (14c, 16c), the bracket L-shaped section having a capacitor seating surface (14a',16a') and an assembly conducting surface (14a",16a"), the capacitor seating surface adjacent to the pair of bracket arcuate sections and substantially perpendicular to the assembly conducting surface, and
at least one capacitive element (12), each of the at least one capacitive elements having a first and a second end, the first end of each of the at least one capacitive elements making electrical contact with the capacitor seating surface of the first bracket, the second end of each of the at least one capacitive elements making electrical contact with the capacitor seating surface of the second bracket.

9. The capacitor assembly of claim 8 further comprising a hole in each of the capacitor seating surfaces, and a first fastener inserted into each of the holes of the capacitor seating surfaces to keep the first or second ends of the at least one capacitive elements in contact with its adjacent capacitor seating surface.

10. The capacitor assembly of claim 8 further comprising a hole in each of the capacitor seating surfaces, and a through fastener inserted through the center spool passage of one of the at least one capacitive elements and adjacent holes in the capacitor seating surfaces to keep the first or second ends of the one of the at least one capacitive elements in contact with its adjacent capacitor seating surface.

11. The capacitor assembly of claim 9 further comprising a through fastener inserted through the center spool passage of one of the at least one capacitive elements and adjacent first fasteners to keep the first or second ends of the one of the at least one capacitive elements in contact with its adjacent capacitor seating surface.

12. The capacitor assembly of claim 8 further comprising a solder connection between each end of the at least one capacitive elements and its adjacent capacitor seating surface.

13. The capacitor assembly of claim 8 further comprising a first connecting fastener inserted in each of the regions formed by the bracket arcuate sections in the first bracket and connecter to a first bus bar, and a second connecting fastener inserted in each of the regions formed by the bracket arcuate sections in the second bracket whereby the assembly conducting surfaces of the first and second brackets make contact with the first and second bus bars respectively.

14. The capacitor assembly of claim 8 further comprising a hole in each of the capacitor seating surfaces, a first connecting fastener inserted in a first bus bar and each of the holes in the first bracket, and a second connecting fastener inserted in a second bus bar and each of the holes in the second bracket whereby the capacitor seating surfaces of the first and second brackets make contact with the first and second bus bars respectively.

15. A method of forming a capacitor assembly, the method comprising the steps of:
removing at least one cutout rectangular section from the bottom of a first and a second electrically conductive rectangular stock;
forming an arcuate section in the first and second electrically conductive rectangular stock above each of the removed at least one cutout rectangular sections;
blending the first and second electrically conductive rectangular stock along a horizontal line extending along the bottom of the arcuate section to form an assembly conducting section approximately perpendicular to a capacitor seating section adjacent to the arcuate section; and
electrically connecting at least one capacitive element between the capacitor seating sections on the first and second electrically conductive rectangular stock.

16. The method of claim 15 further comprising the step of inserting a fastener in the regions formed by the arcuate sections in the first and second electrically conductive rectangular stock and connecting the fastener associated with the first and second electrically conductive rectangular stock to a first and second bus bar, respectively, so that the assembly conducting surfaces of the first and second electrically conductive rectangular stock make contact with the first and second bus bars, respectively.

17. The method of claim 15 further comprising the steps of inserting a first fastener through a first bus bar and the capacitor seating section of the first electrically conductive rectangular stock, and inserting a second fastener through a second bus bar and the capacitor seating section of the second electrically conductive rectangular stock, so that the capacitor seating surface of the first electrically conductive rectangular stock makes contact with the first bus bar, and the capacitor seating surface of the second electrically conductive rectangular stock makes contact with the second bus bar.

## Patentansprüche

1. Kondensatorbaugruppe, umfassend:
eine erste (14) und zweite (16) Klammer, wobei die erste und zweite Klammer jeweils einen bogenförmigen Klammerabschnitt (14c, 16c) aufweist, der zwischen einem Paar L-formiger Klammerabschnitte (14a, 14b, 16a, 16b) angeordnet ist, wobei jedes Paar L-förmiger Klammerabschnitte eine Kondensatorauflagefläche (14a', 14b', 16a', 16b') und eine Baugruppenleitungsfläche (14a", 14b", 16a", 16b") aufweist, wobei die Kondensatorauflagefläche an den bogenförmigen Klammerabschnitt angrenzt und im Wesentlichen senkrecht zur Baugruppenleitungsfläche ist, und
wenigstens zwei kapazitive Elemente (12), wobei jedes der wenigstens zwei kapazitiven Elemente ein erstes und ein zweites Ende aufweist, wobei die ersten Enden der wenigstens zwei kapazitiven Elemente elektrisch mit den Kondensatorauflageflächen auf der ersten Klammer in Kontakt stehen und die zweiten Enden der wenigstens zwei kapazitiven Elemente elektrisch mit den Kondensatorauflageflächen auf der zweiten Klammer in Kontakt stehen.

2. Kondensatorbaugruppe nach Anspruch 1, die darüber hinaus ein Loch (91) in jeder der Kondensatorauflageflächen und ein erstes Befestigungselement (22) umfasst, das in jedem der Löcher der Kondensatorauflageflächen eingesetzt ist, um das erste oder zweite Ende der wenigstens zwei kapazitiven Elemente in Kontakt mit seiner angrenzenden Kondensatorauflagefläche zu halten.

3. Kondensatorbaugruppe nach Anspruch 1, die darüber hinaus ein Loch in jeder der Kondensatorauflageflächen und ein Durchsteckbefestigungselement (24) umfasst, das durch die Mittelspulenpassage eines der wenigstens zwei kapazitiven Elemente und angrenzende Löcher in den Kondensatorauflageflächen eingesetzt ist, um das erste oder zweite Ende des einen der wenigstens zwei kapazitiven Elemente in Kontakt mit seiner angrenzenden Kondensatorauflagefläche zu halten.

4. Kondensatorbaugruppe nach Anspruch 2, die darüber hinaus ein Durchsteckbefestigungselement umfasst, das durch die Mittelspulenpassage eines der wenigstens zwei kapazitiven Elemente und angrenzenden ersten Befestigungselemente eingesetzt ist, um das erste oder zweite Ende des einen der wenigstens zwei kapazitiven Elemente in Kontakt mit seiner angrenzenden Kondensatorauflagefläche zu halten.

5. Kondensatorbaugruppe nach Anspruch 1, die darüber hinaus eine Lötverbindung zwischen jedem Ende der wenigstens zwei kapazitiven Elemente und seiner angrenzenden Kondensatorauflagefläche umfasst.

6. Kondensatorbaugruppe nach Anspruch 1, die darüber hinaus ein erstes Verbindungsbefestigungselement (18), das in den Bereich eingesetzt ist, der durch den bogenförmigen Klammerabschnitt in der ersten Klammer gebildet wird, und mit einer ersten Verteilerschiene (94) verbunden ist, und ein zweites Verbindungsbefestigungselement umfasst, das in den Bereich eingesetzt ist, der durch den bogenförmigen Klammerabschnitt in der zweiten Klammer gebildet wird, und mit einer zweiten Verteilerschiene (95) verbunden ist, wodurch die Baugruppenleitungsflächen der ersten und zweiten Klammern jeweils in Kontakt mit der ersten und zweiten Verteilerschiene kommen.

7. Kondensatorbaugruppe nach Anspruch 1, die darüber hinaus ein Loch in jeder der Kondensatorauflageflächen, ein erstes Verbindungsbefestigungselement, das in eine erste Verteilerschiene und jedes der Löcher in der ersten Klammer eingesetzt ist, und ein zweites Verbindungsbefestigungselement umfasst, das in eine zweite Verteilerschiene und jedes der Löcher in der zweiten Klammer eingesetzt ist, wodurch die Kondensatorauflageflächen der ersten und zweiten Klammer jeweils in Kontakt mit der ersten und zweiten Verteilerschiene kommen.

8. Kondensatorbaugruppe, umfassend:
eine erste und zweite Klammer (14, 16), wobei die erste und zweite Klammer jeweils einen L-förmigen Klammerabschnitt (14a, 16a) aufweist, der zwischen einem Paar bogenförmiger Klammerabschnitte (14c, 16c) angeordnet ist, wobei der L-förmige Klammerabschnitt eine Kondensatorauflagefläche (14a', 16a') und eine Baugruppenleitungsfläche (14a", 16a") aufweist, wobei die Kondensatorauflagefläche an das Paar bogenförmiges Klammerabschnitte angrenzt und im Wesentlichen senkrecht zur Baugruppenleitungsfläche ist, und
wenigstens ein kapazitives Element (12), wobei jedes des wenigstens einen kapazitiven Elements ein erstes und ein zweites Ende aufweist, wobei das erste Ende des wenigstens einen kapazitiven Elements elektrisch mit der Kondensatorauflagefläche der ersten Klammer in Kontakt steht und das zweite Ende des wenigstens einen kapazitiven Elements elektrisch mit der Kondensatorauflagefläche der zweiten Klammer in Kontakt steht.

9. Kondensatorbaugruppe nach Anspruch 8, die darüber hinaus ein Loch in jeder der Kondensatorauflageflächen und ein erstes Befestigungselement umfasst, das in jedem der Löcher der Kondensatorauflageflächen eingesetzt ist, um das erste oder zweite Ende des wenigstens einen kapazitiven Elements in Kontakt mit seiner angrenzenden Kondensatorauflagefläche zu halten.

10. Kondensatorbaugruppe nach Anspruch 8, die darüber hinaus ein Loch in jeder der Kondensatorauflageflächen und ein Durchsteckbefestigungselement umfasst, das durch die Mittelspulenpassage eines des wenigstens einen kapazitiven Elements und angrenzende Löcher in den Kondensatorauflageflächen eingesetzt ist, um das erste oder zweite Ende des einen der wenigstens zwei kapazitiven Elemente in Kontakt mit seiner angrenzenden Kondensatorauflagefläche zu halten.

11. Kondensatorbaugruppe nach Anspruch 9, die darüber hinaus ein Durchsteckbefestigungselement umfasst, das durch die Mittelspulenpassage eines des wenigstens einen kapazitiven Elements und angrenzenden ersten Befestigungselemente eingesetzt ist, um das erste oder zweite Ende des einen des wenigstens einen kapazitiven Elements in Kontakt mit seiner angrenzenden Kondensatorauflagefläche zu halten.

12. Kondensatorbaugruppe nach Anspruch 8, die darüber hinaus eine Lötverbindung zwischen jedem Ende des wenigstens einen kapazitiven Elements und seiner angrenzenden Kondensatorauflagefläche umfasst.

13. Kondensatorbaugruppe nach Anspruch 8, die darüber hinaus ein erstes Verbindungsbefestigungselement, das in jeden der Bereiche eingesetzt ist, der durch die bogenförmigen Klammerabschnitte in der ersten Klammer gebildet wird, und mit einer ersten Verteilerschiene verbunden ist, und ein zweites Verbindungsbefestigungselement umfasst, das in jeden der Bereiche eingesetzt ist, der durch die bogenförmigen Klammerabschnitte in der zweiten Klammer gebildet wird, und mit einer zweiten Verteilerschiene verbunden ist, wodurch die Baugruppenleitungsflächen der ersten und zweiten Kammern jeweils in Kontakt mit der ersten und zweiten Verteilerschiene kommen.

14. Kondensatorbaugruppe nach Anspruch 8, die darüber hinaus ein Loch in jeder der Kondensatorauflageflächen, ein erstes Verbindungsbefestigungselement, das in eine erste Verteilerschiene und jedes der Löcher in der ersten Klammer eingesetzt ist, und ein zweites Verbindungsbefestigungselement umfasst, das in eine zweite Verteilerschiene und jedes der Löcher in der zweiten Klammer eingesetzt ist, wodurch die Kondensatorauflageflächen der ersten und zweiten Klammer jeweils in Kontakt mit der ersten und zweiten Verteilerschiene kommen.

15. Verfahren zur Bildung einer Kondensatorbaugruppe, wobei das Verfahren die folgenden Schritte aufweist:
Entfernen wenigstens eines rechtwinkligen Ausschnitts aus dem Boden eines ersten und eines zweiten elektrisch leitfähigen rechtwinkligen Materials;
Bilden eines bogenförmigen Abschnitts im ersten und zweiten elektrisch leitfähigen rechtwinkligen Material über jedem der entfernten wenigstens einen rechtwinkligen Ausschnitte;
Biegen des ersten und zweiten elektrisch leitfähigen rechtwinkligen Materials entlang einer horizontalen Linie, die sich entlang dem Boden des bogenförmigen Abschnitts erstreckt, um einen Baugruppenleitungsabschnitt zu bilden, der ungefähr senkrecht zu einem Kondensatorauflageabschnitt ist, der an den bogenförmigen Abschnitt angrenzt; und
elektrisches Anschließen wenigstens eines kapazitiven Elements zwischen den Kondensatorauflageabschnitten auf dem ersten und zweiten elektrisch leitfähigen rechtwinkligen Material.

16. Verfahren nach Anspruch 15, das darüber hinaus den Schritt des Einsetzens eines Befestigungselements in den Bereichen umfasst, die durch die bogenförmigen Abschnitte im ersten und zweiten elektrisch leitfähigen rechtwinkligen Material gebildet werden, und Verbinden der dem ersten und zweiten elektrisch leitfähigen rechtwinkligen Material zugehörigen Befestigungselemente mit einer ersten bzw. zweiten Verteilerschiene, so dass die Kondensatorauflageflächen des ersten und zweiten elektrisch leitfähigen rechtwinkligen Materials mit der ersten bzw. zweiten Verteilerschiene in Kontakt kommen.

17. Verfahren nach Anspruch 15, das darüber hinaus die Schritte des Einsetzens eines ersten Befestigungselements durch eine erste Verteilerschiene und den Kondensatorauflageabschnitt des ersten elektrisch leitfähigen rechtwinkligen Materials und des Einsetzens eines zweiten Befestigungselements durch eine zweite Verteilerschiene und den Kondensatorauflageabschnitt des zweiten elektrisch leitfähigen rechtwinkligen Materials umfasst, so dass die Kondensatorauflagefläche des ersten elektrisch leitfähigen rechtwinkligen Materials mit der ersten Verteilerschiene in Kontakt kommt und die Kondensatorauflagefläche des zweiten elektrisch leitfähigen rechtwinkligen Materials mit der zweiten Verteilerschiene in Kontakt kommt.

## Revendications

1. Ensemble condensateur, comprenant :
un premier (14) et un deuxième (16) supports, chacun des premier et deuxième supports étant dotés d'une partie de support arquée (14c, 16c) disposée entre une paire de parties de support en forme de L (14a, 14b, 16a, 16b), chacune des paires de parties de support en forme de L ayant une surface d'appui du condensateur (14a', 14b', 16a', 16b') et une surface conductrice d'ensemble (14a", 14b", 16a", 16b"), la surface d'appui du condensateur étant en position adjacente à la partie de support arquée et sensiblement perpendiculaire à la surface conductrice d'ensemble, et
au moins deux éléments capacitifs (12), chacun des au moins deux éléments capacitifs étant dotés d'une première et une deuxième extrémité, les premières extrémités des au moins deux éléments capacitifs établissant un contact électrique avec les surfaces d'appui du condensateur sur le premier support, les deuxièmes extrémités des au moins deux éléments capacitifs établissant un contact électrique avec les surfaces d'appui du condensateur sur le deuxième support.

2. Ensemble condensateur conforme à la revendication 1, comportant en outre un trou (91) dans chacune des surfaces d'appui du condensateur, et une première fixation (22) insérée dans chacun des trous des surfaces d'appui du condensateur pour maintenir les première ou deuxième extrémités des au moins deux éléments capacitifs en contact avec leur surface d'appui du condensateur adjacente.

3. Ensemble condensateur conforme à la revendication 1, comportant en outre un trou dans chacune des surfaces d'appui du condensateur, et une fixation traversante (24) insérée à travers le passage central de la bobine de l'un des au moins deux éléments capacitifs et des trous adjacents dans les surfaces d'appui du condensateur pour maintenir les première ou deuxième extrémités de l'un des au moins deux éléments capacitifs en contact avec leur surface d'appui du condensateur adjacente.

4. Ensemble condensateur conforme à la revendication 2, comportant en outre une fixation traversante insérée à travers le passage central de la bobine de l'un des au moins deux éléments capacitifs et des premières fixations adjacentes pour maintenir les première ou deuxième extrémités de l'un des au moins deux éléments capacitifs en contact avec leur surface d'appui du condensateur adjacente.

5. Ensemble condensateur conforme à la revendication 1, comportant en outre un raccord à souder entre chaque extrémité des au moins deux éléments capacitifs et leur surface d'appui du condensateur adjacente.

6. Ensemble condensateur conforme à la revendication 1, comportant en outre une première fixation de raccord (18) insérée dans la région formée par la partie arquée de support du premier support et connectée à une première barre omnibus (94) et une deuxième fixation de raccord insérée dans la région formée par la partie arquée de support du deuxième support et connectée à une deuxième barre omnibus (95), de manière à ce que les surfaces conductrices de l'ensemble des premier et deuxième supports entrent en contact avec respectivement la première et la deuxième barres omnibus.

7. Ensemble condensateur conforme à la revendication 1, comportant en outre un trou dans chacune des surfaces d'appui du condensateur, une première fixation de raccord insérée dans une première barre omnibus et chacun des trous du premier support et une deuxième fixation de raccord insérée dans une deuxième barre omnibus et chacun des trous du deuxième support de manière à ce que les surfaces d'appui du condensateur des premier et deuxième supports entrent en contact avec respectivement la première et la deuxième barre omnibus.

8. Ensemble condensateur, comprenant :
un premier et un deuxième support (14, 16), chacun des premier et deuxième supports étant doté d'une partie de support en forme de L (14a, 16a) disposée entre une paire de parties de support arquées (14c, 16c), la partie de support en forme de L ayant une surface d'appui du condensateur (14a', 16a') et une surface conductrice de l'ensemble (14a", 16a"), la surface d'appui du condensateur étant en position adjacente à la paire de parties de support arquées et sensiblement perpendiculaire à la surface conductrice de l'ensemble, et
au moins un élément capacitif (12), chacun des au moins un éléments capacitifs étant doté d'une première et une deuxième extrémité, la première extrémité de chacun des au moins un éléments capacitifs établissant un contact électrique avec la surface d'appui du condensateur du premier support, la deuxième extrémité de chacun des au moins un éléments capacitifs établissant un contact électrique avec la surface d'appui du condensateur du deuxième support.

9. Ensemble condensateur conforme à la revendication 8, comportant en outre un trou dans chacune des surfaces d'appui du condensateur, et une première fixation insérée dans chacun des trous des surfaces d'appui du condensateur pour maintenir les première ou deuxième extrémités des au moins un éléments capacitifs en contact avec leur surface d'appui du condensateur adjacente.

10. Ensemble condensateur conforme à la revendication 8, comportant en outre un trou dans chacune des surfaces d'appui du condensateur, et une fixation traversante insérée à travers le passage central de la bobine de l'un des au moins un éléments capacitifs et des trous adjacents dans les surfaces d'appui du condensateur pour maintenir les première ou deuxième extrémités de l'un des au moins un éléments capacitifs en contact avec leur surface d'appui du condensateur adjacente.

11. Ensemble condensateur conforme à la revendication 9, comportant en outre une fixation traversante insérée à travers le passage central de la bobine de l'un des au moins un éléments capacitifs et des premières fixations adjacentes pour maintenir les première ou deuxième extrémités de l'un des au moins un éléments capacitifs en contact avec leur surface d'appui du condensateur adjacente.

12. Ensemble condensateur conforme à la revendication 8, comportant en outre un raccord à souder entre chaque extrémité des au moins un éléments capacitifs et leur surface d'appui du condensateur adjacente.

13. Ensemble condensateur conforme à la revendication 8, comportant en outre une première fixation de raccord insérée dans chacune des régions formées par les parties de support arquées du premier support et connectée à une première barre omnibus, et une deuxième fixation de raccord insérée dans chacune des régions formées par les parties de support arquées du deuxième support de manière à ce que les surfaces conductrices de l'ensemble des premier et deuxième supports entrent en contact avec respectivement la première et la deuxième barres omnibus.

14. Ensemble condensateur conforme à la revendication 8, comportant en outre un trou dans chacune des surfaces d'appui du condensateur, une première fixation de raccord insérée dans une première barre omnibus et chacun des trous du premier support, et une deuxième fixation de raccord insérée dans une deuxième barre omnibus et chacun des trous du deuxième support de manière à ce que les surfaces d'appui du condensateur des premier et deuxième supports entrent en contact avec respectivement la première et la deuxième barres omnibus.

15. Procédé pour former un ensemble de condensateur, le procédé comportant les étapes consistant à :
retirer au moins une partie rectangulaire découpée dans le fond d'une première et une deuxième plaque rectangulaire conductrice d'électricité ;
former une partie arquée dans la première et la deuxième plaque rectangulaire conductrice d'électricité au-dessus de chacune des au moins une parties rectangulaires découpées ;
courber la première et la deuxième plaque rectangulaire conductrice d'électricité le long d'une ligne horizontale s'étendant le long du fond de la partie arquée pour former une partie conductrice de l'ensemble globalement perpendiculaire à une partie d'appui du condensateur adjacente à la partie arquée ; et
connecter électriquement au moins un élément capacitif entre les parties d'appui du condensateur sur la première et la deuxième plaque conductrice d'électricité.

16. Procédé conforme à la revendication 15, comprenant en outre les étapes consistant à insérer une fixation dans les régions formées par les parties arquées dans la première et la deuxième plaque rectangulaire conductrice d'électricité et à connecter la fixation associée à la première et la deuxième plaque rectangulaire conductrice d'électricité à respectivement une première et une deuxième barre omnibus, de manière à ce que les surfaces conductrices de l'ensemble de la première et la deuxième plaque rectangulaire conductrice d'électricité entrent en contact respectivement avec la première et la deuxième barre omnibus.

17. Procédé conforme à la revendication 15, comprenant en outre les étapes consistant à insérer une première fixation à travers une première barre omnibus et la partie d'appui du condensateur de la première plaque rectangulaire conductrice d'électricité, et à insérer une deuxième fixation à travers une deuxième barre omnibus et la partie d'appui du condensateur de la deuxième plaque rectangulaire conductrice d'électricité, de manière à ce que la surface d'appui du condensateur de la première plaque rectangulaire conductrice d'électricité entre en contact avec la première barre omnibus, et la surface d'appui du condensateur de la deuxième plaque rectangulaire conductrice d'électricité entre en contact avec la deuxième barre omnibus.
